# EUROPEAN PATENT APPLICATION

(11) **EP 4 802 977 A1**
(43) Date of publication of application: **09.09.2026**
(21) Application number: 26161520.7
(22) Date of filing: 02.03.2026
(51) Int. Cl.: A47L 15/24

(54) **CONVEYOR WAREWASHER WITH LOAD/UNLOAD PLATFORM WITH ACCESS FEATURES**

(30) Priority: 04.03.2025 US 202563766622 P; 13.02.2026 US 202619540118
(71) Applicant: Illinois Tool Works Inc., Glenview IL 60025 (US)
(72) Inventor: DeBROSSE, Walter L., Glenview, Illinois, 60025 (US); SCHAMEL III, John Edward, Glenview, Illinois, 60025 (US); KIM, Jaehan, Glenview, Illinois, 60025 (US); SOCHA, Gerard D., Glenview, Illinois, 60025 (US)
(74) Representative: Trinks, Ole

(57) **Abstract**

A conveyor warewasher includes a housing that defines a tunnel, with one or more ware cleaning zones located along the tunnel. A conveyor is provided for carrying wares in a conveyance direction through the one or more ware cleaning zones. The housing further defines at least one of a load end or an unload end outside of the tunnel, and the conveyor includes a portion that extends beyond the tunnel and along the one of the load end or the unload end. At the one of the load end or the unload end, the housing includes a set of upper and lower pivoting access panels that are pivotably movable between respective closed/use positions and open/access positions.

## Description

### TECHNICAL FIELD

This application relates generally to commercial conveyor warewashers and, more specifically, to conveyor warewashers having load and/or unload ends.

### BACKGROUND

Conveyor dishwashers (aka conveyor warewashers) are used in the commercial sector. In contrast to domestic dishwashers, in which the washware to be cleaned remains fixed in position in the washer during cleaning, the washware in conveyor dishwashers is conveyed through different treatment zones of the washer.

In conveyor dishwashers, the washware, for example trays, dishes, pots, glasses, cutlery and other utensils to be cleaned, is conveyed through a plurality of treatment zones, for example prewash zone(s), main wash zone(s), post-wash or pre-rinse zone(s), final rinse zone(s), and drying zone(s). For conveying washware through the conveyor dishwasher in a conveying direction, use is made of a conveyor apparatus, which generally has compartments for holding washware. In a flight-type dishwasher, the compartments can be formed by supporting fingers on a conveyor belt of the conveyor apparatus, where the conveyor belt moves in a continuous loop.

It is important to regularly clean such conveyor warewashers, and access to various regions of the warewashers for cleaning can prove difficult.

Accordingly, it would be desirable to provide a conveyor warewasher that better facilitates customer access to regions for cleaning and/or maintenance.

### SUMMARY

In one aspect, a conveyor warewasher includes a housing that defines a tunnel, with one or more ware cleaning zones located along the tunnel. A conveyor is provided for carrying wares in a conveyance direction through the one or more ware cleaning zones. The housing further defines at least one of a load end or an unload end outside of the tunnel, and the conveyor includes a portion that extends beyond the tunnel and along the one of the load end or the unload end. At the one of the load end or the unload end, the housing includes a set of upper and lower pivoting access panels that are pivotably movable between respective closed/use positions and open/access positions.

In another aspect, a conveyor warewasher includes a housing that defines a tunnel, with one or more ware cleaning zones located along the tunnel. A conveyor is provided for carrying wares in a conveyance direction through the one or more ware cleaning zones. The housing further defines at least one of a load end or an unload end outside of the tunnel, and the conveyor includes a portion that extends beyond the tunnel and along the one of the load end or the unload end. At the one of the load end or the unload end, the housing includes a side panel that is removable, the side panel being mountable in a closed/use position or hangable in an open/access position to access side regions below the conveyor.

The details of one or more embodiments are set forth in the accompanying drawings and the description below. Other features, objects, and advantages will be apparent from the description and drawings, and from the claims.

### BRIEF DESCRIPTION OF THE DRAWINGS

- Fig. 1: is a perspective view of a conveyor warewasher;
- Fig. 2: is a side schematic of part of an exemplary conveyor;
- Figs. 3A-3B: show perspectives of a load end of the conveyor warewasher;
- Figs. 4A-4B: show perspectives of an unload end of the conveyor warewasher; and

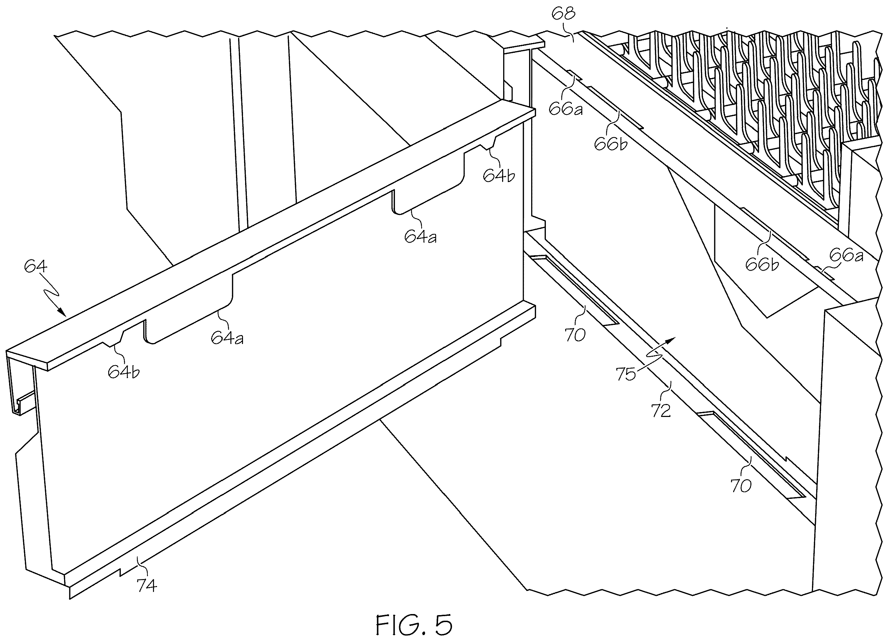

- Fig. 5: shows a perspective of a removed a side panel.

### DETAILED DESCRIPTION

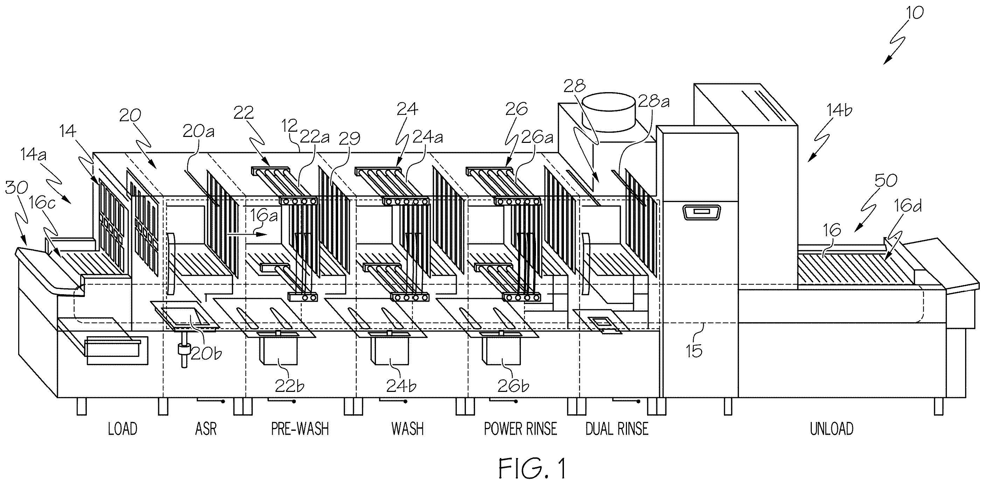

Referring to Fig. 1-2, a conveyor warewasher 10 includes a housing 12 (e.g., frame with metal skin(s)) that defines a tunnel 14 through which a conveyor 16 travels in a conveyance direction 16a. Within the tunnel, various cleaning zones are provided, such as an automatic soil removal zone 20, a pre-wash zone 22, a wash zone 24, a power rinse zone 26 and/or a dual rinse/final rinse zone. Generally, the automatic soil removal zone 20 may include an arm 20a with nozzles to spray liquid and/or air in a manner to move food soils from wares and down to a scrap basket 20b for collection. The pre-wash zone 22, wash zone 24 and power rinse zone 26 may include multiple upper and/or lower spray arms 22a, 24a, 26a, fed by respective pump that recirculate and spray a liquid from lower tanks 22b, 24b, 26b. The dual rinse/final rinse zone 28 include one or more spray arms 28a to spray a fresh rinse liquid (e.g., from a booster tank) on the wares. Embodiments with less zones (e.g., no zone 20) are possible, and embodiments with other zones (e.g., a drying zone) are also possible. As shown, various removable curtains 29 may be provided between the cleaning zones.

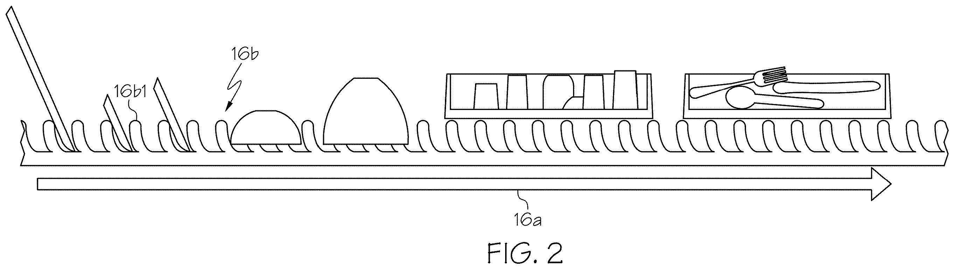

In embodiments, the conveyor 16 is formed as a belt-type assembly 16b that follows a looped path 15 (e.g., driven by a motor etc.) that extends out of the front end 14a of the tunnel and out of the unload end 14b of the tunnel, to facilitate both placement of soiled wares into the machine and removal of cleaned wares from the machine. The belt-type assembly 16b includes a series of outwardly projecting fingers 16b1 that define regions for insertion of individual wares (cups, bowls, plates and trays) or edge portions of wares, and/or that can support racks holding ware, per Fig. 2.

The conveyor 16 includes an infeed end 16c that extends beyond the tunnel and along a load end 30 of the machine, and an outfeed end 16d that extends beyond the tunnel and along the unload end 50 of the machine.

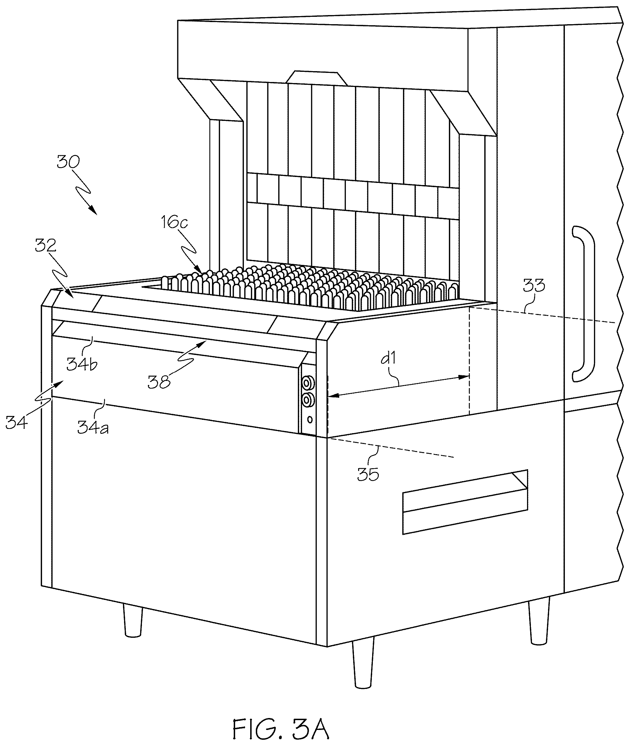

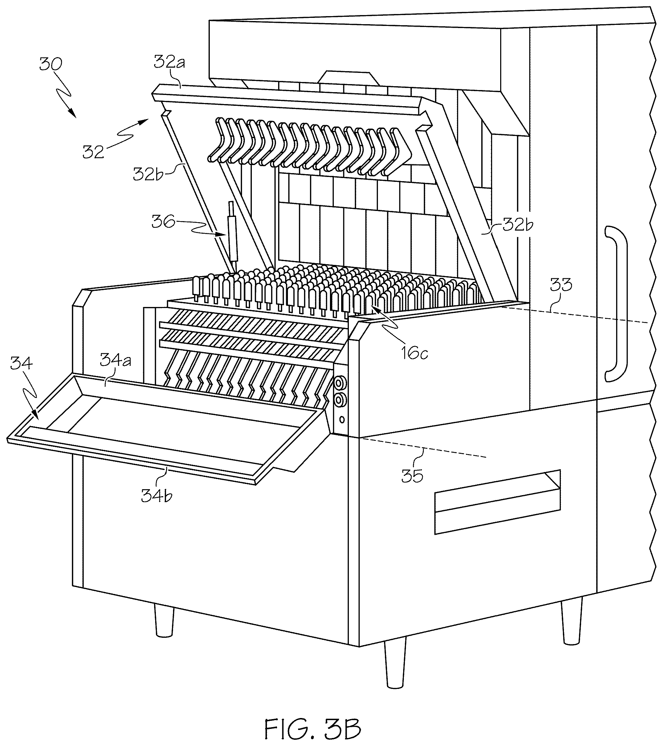

Referring to Figs. 3A-3B, the load end 30 of the machine may include a set of upper and lower pivoting access panels 32, 34 that are pivotably movable between closed/use positions (Fig. 3A) and open/access positions (Fig. 3B). Here, the upper panel 32 includes a distal end 32a connected by arms 32b to a pivot location defining a pivot axis 33 on or relative to the housing. The upper panel 32 defines upper surface regions of the load end and along/around the end of the conveyor 14, when in the closed/use position. A lift-assist damper 36 (e.g., pivotably connected at one end to the housing frame and the other end to the upper panel) may be provided to aid in moving the upper panel 32 to the open/access position and maintaining the upper panel in such position. The lower panel 34 includes a lower end 34a that is pivotably connected to the housing, per pivot axis 35, and an upper distal end 34b. The lower panel 34 is configured to define part of the front surface region of the machine, when in the closed/use position. The two panels 32, 34 are configured to provide a user access slot/region 38, when in the closed/use positions, to enable a machine operator/user to grasp the distal end 32a of the upper panel to pivot the upper panel upward, and to then grasp the distal end 34b of the lower panel and pivot the lower panel downward. Closure of the panels involves the reverse movement of each. Interacting detent features, snap-connect/disconnect features or other structures (e.g., at the sides of the panels) may be provided to releasable maintain the upper and lower panels in their respective closed/use positions. Notably, in the open/access positions the most forward end of the looped path of the conveyor 16 (e.g., infeed end 16c) is accessible, above the conveyor, along side regions of the conveyor and below the conveyor, for the purpose of cleaning, etc.

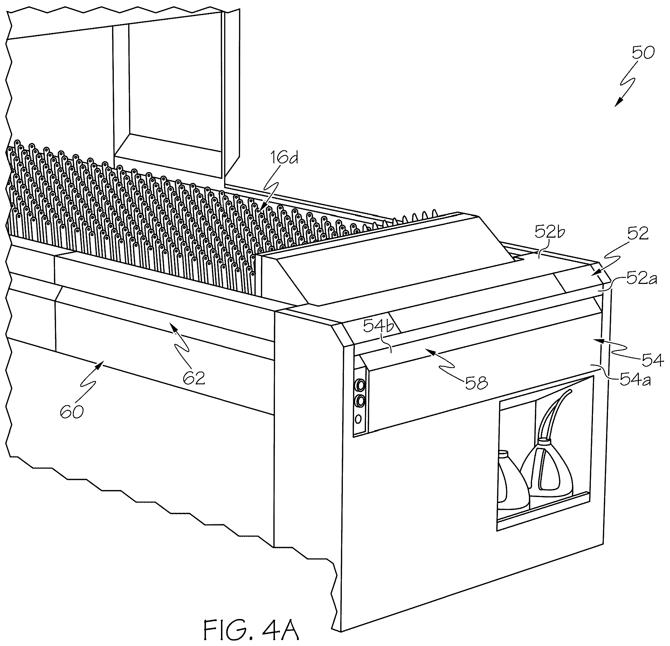

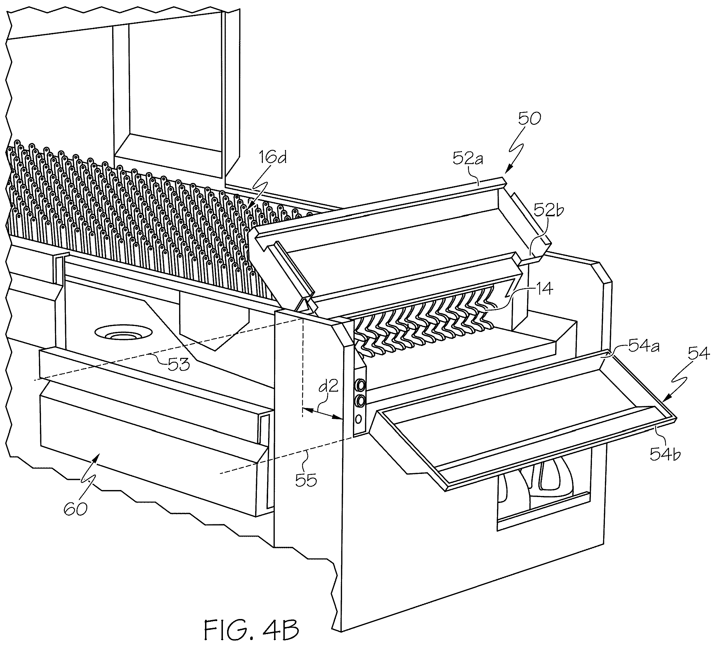

Referring to Figs. 4A-4B, the unload end 50 of the machine may include a set of upper and lower pivoting access panels 52, 54 that are pivotably movable between closed/use positions (Fig. 4A) and open/access positions (Fig. 4B). Here, the upper panel 52 includes a distal end 52a and a pivot end 52b that is connected to a pivot location defining a pivot axis 53 on or relative to the housing. The upper panel defines upper surface regions of the unload end, when in the closed/use position. The upper panel 52 pivots far enough when in the open/access position such that the weight of the panel under gravity will maintain the upper panel in the open/access position. The lower panel 54 includes a lower end 54a that is pivotably connected to the housing, per pivot axis 55, and an upper distal end 54b. The lower panel 54 is configured to define part of the rear surface region of the machine, when in the closed/use position. The two panels 52, 54 are configured to provide a user access/grip slot/region 58, when in the closed/use positions, to enable a machine operator/user to grasp the distal end 52a of the upper panel to pivot the upper panel upward, and to then grasp the distal end 54b of the lower panel and pivot the lower panel downward. Closure of the panels involves the reverse movement of each. Detent features or other structures may be provided to maintain the upper and lower panels in their respective closed/use positions. Notably, in the open/access positions the most rearward end of the looped path of the conveyor 16 (e.g., outfeed end 16d) is accessible, particularly below the conveyor, for the purpose of cleaning, etc.

Notably, in the case of both the load end and the unload end, the respective upper and lower panels are arranged to operate/pivot in a jaw-type manner relative to each other (e.g., the free, distal ends of the upper lower panels move away from each other when they respectively move to the open/access positions and move back toward each other when they respectively move to the closed/use positions). Here, the pivot axis 33 of upper panel of the load end is spaced away from the pivot axis 35 of the lower panel of the load end (in a direction parallel to conveyor movement) by a distance d1 (e.g., more than fifteen inches), and the pivot axis 53 of upper panel of the unload end is spaced away from the pivot axis 55 of the lower panel of the unload end (in a direction parallel to conveyor movement) by a lesser distance d2 (e.g., less than ten inches). However, variations are possible. In both cases, the upper panel pivot axis 33, 53 is located at an elevation that is higher than the lower panel pivot axis 35, 55 (e.g., higher by at least four inches, such as at least six inches).

As also seen in Figs. 4A-4B, at one or both side regions of the unload end 50, the housing includes a side panel 60 that is movable between a mounted closed/use position (Fig. 4A) and an open/access position (Fig. 4B). The side panel 60 is formed with an upper handle/grip region slot 62 that facilitates grasping by a machine operator/user. Rather than pivoting, the side panel 60 is removable from the position shown in Fig. 4A and hangable in the position shown in Fig. 4B. In this regard, to facilitate location of the side panel in the position of either Fig. 4A or Fig. 4B, the side panel 60 includes hang features at its inwardly facing side. Here, the hang features are formed as downwardly extending space apart panel segments 64a and downwardly extending spaced apart panel segments 64b (e.g., formed by bends in the panel structure) at the upper side of the side panel. These panel segments 64a, 64b slide down into hang features in the form of upper panel receiving slots 66a, 66b of an upper side rail 68 when the side panel 60 is mounted in the position of Fig. 4A, and slide down into lower panel receiving slots 70 of a lower side rail 72 when the side panel 60 is hanging in the position of Fig. 4B. The upper side rail and lower side rail define upper and lower ends of an access opening 75 that is uncovered when the side panel is hanging in the open/access position of Fig. 4B. The side panel 60 also includes a lower, downwardly extending panel segment 74 that seats inwardly of the lower side rail 72 when the side panel is in the position of Fig. 4A, and that rests against the outer surface of the machine housing when the side panel is in the position of Fig. 4B. One or more similar side panels could also be provided at the load end of the machine.

It is to be clearly understood that the above description is intended by way of illustration and example only, is not intended to be taken by way of limitation, and that other changes and modifications are possible.

## Claims

1. A conveyor warewasher, comprising:
- a housing that defines a tunnel;
- one or more ware cleaning zones located along the tunnel;
- a conveyor for carrying wares in a conveyance direction through the one or more ware cleaning zones;
wherein the housing further defines at least one of a load end or an unload end outside of the tunnel, and the conveyor includes a portion that extends beyond the tunnel and along the one of the load end or the unload end;
wherein, at the one of the load end or the unload end, the housing includes a set of upper and lower pivoting access panels that are pivotably movable between respective closed/use positions and open/access positions.

2. The conveyor warewasher of claim 1,
wherein the upper panel includes a distal end and a pivot end pivotably connected to the housing, the upper panel defining upper surface regions of the one of the load end or the unload end, when in the closed/use position.

3. The conveyor warewasher of claim 2,
wherein the lower panel includes a lower end pivotably connected to the housing, and an upper distal end, the lower panel configured to define part of a surface region of the one of the load end or the unload end, when in the closed/use position.

4. The conveyor wareasher of claim 3,
wherein the distal end of the upper panel and the distal end of the lower panel are positioned proximate each other, when in the closed/sue position, and collectively define a user access slot region to enable a machine operator/user to grasp the distal end of the upper panel.

5. The conveyor warewasher of claim 1,
wherein, when the upper panel and the lower panel are in the open/access positions an end portion of a looped path of the conveyor is accessible, above, alongside and/or below the end portion, for the purpose of cleaning.

6. The conveyor warewasher of claim 1,
wherein the upper panel and lower panel are configured to move in a jaw-type manner relative to each other.

7. The conveyor warewasher of claim 1,
wherein the one of the load end or the unload end includes a side panel that is removable, the side panel being mountable in a closed/use position or hangable in an open/access position to access side regions below the conveyor.

8. The conveyor warewasher of claim 7,
wherein the side panel is formed with an upper handle/grip region slot that facilitates grasping by a machine operator/user.

9. The conveyor warewasher of claim 8,
wherein the side panel includes one or more hang features that engage hang features of an upper rail when the side panel is in the closed/use position and that engage hang features of a lower rail when the side panel is in the open/access position.

10. The conveyor warewasher of claim 9,
wherein the upper rail and lower rail define upper and lower side of an access opening.

11. A conveyor warewasher, comprising:
- a housing that defines a tunnel;
- one or more ware cleaning zones located along the tunnel;
- a conveyor for carrying wares in a conveyance direction through the one or more ware cleaning zones;
wherein the housing further defines at least one of a load end or an unload end outside of the tunnel, and the conveyor includes a portion that extends beyond the tunnel and along the one of the load end or the unload end;
wherein, at the one of the load end or the unload end, the housing includes a side panel that is removable, the side panel being mountable in a closed/use position or hangable in an open/access position to access side regions below the conveyor.

12. The conveyor warewasher of claim 11,
wherein the side panel is formed with an upper handle/grip region slot that facilitates grasping by a machine operator/user.

13. The conveyor warewasher of claim 11,
wherein the side panel includes one or more hang features that engage hang features of an upper rail when the side panel is in the closed/use position and that engage hang features of a lower rail when the side panel is in the open/access position.

14. The conveyor warewasher of claim 13,
wherein the upper rail and lower rail define upper and lower sides of an access opening to a region below the conveyor.
